# EUROPÄISCHE PATENTSCHRIFT

(11) **EP 4 263 937 B1**
(45) Veröffentlichungstag und Bekanntmachung des Hinweises auf die Patenterteilung: **25.12.2024**
(21) Anmeldenummer: 21794485.9
(22) Anmeldetag: 13.10.2021
(51) Int. Cl.: D21F 1/02

(54) **DICHTLIPPE UND VERFAHREN ZUR UEBERWACHUNG DER DICHTLIPPE**
SEALING LIP AND METHOD FOR MONITORING THE SEALING LIP
LÈVRE D'ÉTANCHÉITÉ ET PROCÉDÉ DE SURVEILLANCE DE LA LÈVRE D'ÉTANCHÉITÉ

(30) Priorität: 21.12.2020 AT 511192020
(43) Veröffentlichungstag der Anmeldung: 25.10.2023
(73) Patentinhaber: Andritz AG, 8045 Graz (AT)
(72) Erfinder: BRUECKLER, Georg, 8062 Kumberg (AT); BERGMANN, Michael, 9173 St. Margareten im Rosental (AT)
(74) Vertreter: Anzel, Andreas
(86) Internationale Anmeldenummer: PCT/EP2021/078272
(87) Internationale Veröffentlichungsnummer: WO 2022/135764

(56) Entgegenhaltungen:
- DE-A1- 102017 119 325
- DE-B3- 102012 208 811

## Beschreibung

Die Erfindung betrifft eine Dichtlippe für einen Stoffauflauf, wobei die Dichtlippe ein Verschleißvolumen aufweist. Die Erfindung betrifft weiter ein Dichtlippensystem umfassend eine erfindungsgemäße Dichtlippe und eine Auswerteeinheit zur Signalverarbeitung. Die Erfindung betrifft auch einen Stoffauflauf mit einer erfindungsgemäßen Dichtlippe. Die Erfindung behandelt auch ein Verfahren zur Überwachung eines erfindungsgemäßen Dichtlippensystems.

Im Bereich der Zellstoff- und Papierherstellung erfolgt die Entwässerung von Faserstoffsuspensionen im Formierbereich. Dabei erlaubt der Stoffauflauf die gleichmäßige Verteilung der Faserstoffsuspension über die Breite des Stoffauflaufs, wobei die Faserstoffsuspension strahlförmig dem Formierbereich zugeführt wird. Ist der Strahl als Freistrahl ausgeführt, so kann es zu einer Strahlaufweitung kommen, zu einer ungleichmäßigen Verteilung oder auch zum Einmischen von Luft in den Strahl, was nachteilig für den weiteren Prozess ist. Aus diesem Grund finden Dichtlippen für Stoffaufläufe Verwendung, da diese eine Strahlführung erlauben und das Einmischen von Luft in den Strahl unterbinden.

Die US 2004/0163788 A1 beschreibt einen Zellstoff-Former mit einem Stoffauflauf, wobei der Former als Doppelsiebformer ausgebildet ist. Dabei verbinden die Dichtlippen des Stoffauflaufs den Bereich zwischen dem Stoffauflauf und den Sieben des Doppelsiebformers. So erstrecken sich die Dichtlippen typischerweise über den Tangentenpunkt der Formierwalzen hinaus. Dabei werden - entsprechend dem Strahldruck der zwischen den Dichtlippen geführten Suspension - die Dichtlippen gegen die über die Formierwalzen geführten Bespannungen leicht angepresst und stellen einen dichtenden Kontakt her.

Die DE 10 2017 119 325 A1 beschreibt eine Dichtlippe für einen Stoffauflauf, die aus einem Faserverbundwerkstoff besteht und verbesserte Gebrauchseigenschaften hat. Entsprechend dem Kontakt der Dichtlippen mit den über die Formierwalzen geführten Bespannungen sind die Dichtlippen Verschleißartikel, die eine möglichst hohe Lebensdauer bieten sollen.

Dichtlippen sind in einem sensiblen Maschinenbereich angeordnet. Ein Versagen der Dichtlippe - z. B. durch Ausbrechen von Teilen der Dichtlippe - bedeutet, dass diese Teile in den Formierbereich gelangen und beispielsweise eine Beschädigung der Bespannungen verursachen können. Ein Versagen der Dichtlippen stellt somit eine Gefahr für den Maschinenbetrieb und die Betriebssicherheit dar. Ungeplante Stillstände können die Folge sein. Dies ist zu vermeiden.

Eine Möglichkeit, die Betriebssicherheit zu erhöhen, besteht nun darin, die Lebensdauer der Dichtlippe - z.B. durch geeignete Materialauswahl - zu erhöhen und einen problemlosen Betrieb der Dichtlippen zwischen den üblichen Serviceintervallen der Maschine zu gewährleisten. Ein Austausch erfolgt dann vorausschauend. Bei Verdacht auf Beschädigung der Dichtlippe, erfolgt typischerweise eine optische Begutachtung der Dichtlippe, was einen ungeplanten Maschinenstillstand erfordert, da die Dichtlippe zur Begutachtung aus der Maschine ausgezogen wird.

Ziel der Erfindung ist eine Dichtlippe für einen Stoffauflauf mit einer verbesserten Betriebssicherheit.

Dies gelingt erfindungsgemäß dadurch, dass innerhalb der Dichtlippe zumindest ein Indikator zumindest teilweise im Bereich des Verschleißvolumens angeordnet ist und der Indikator als elektrischer oder optischer Leiter ausgebildet ist. Zunächst ist der Indikator vollständig innerhalb der Dichtlippe angeordnet. Mit fortschreitendem Verschleiß der Dichtlippe wird jedoch der Indikator, der als elektrischer bzw. optischer Leiter ausgebildet ist, aus der Dichtlippe freigelegt. Mit dem Freilegen ändern sich jedoch die elektrischen bzw. optischen Eigenschaften des Leiters signifikant, wodurch der Verschleißfortschritt genau beurteilt werden kann. Der erfindungsgemäße Effekt besteht somit in der Überwachung des Zustands der Dichtlippe und der kontinuierlichen Beurteilung des Verschleißes.

Eine vorteilhafte Ausgestaltung der Dichtlippe ist dadurch gekennzeichnet, dass der Indikator normal zu einer Verschleißrichtung der Dichtlippe und zumindest abschnittsweise in einer Querrichtung der Dichtlippe angeordnet ist. Die Dichtlippen stellen eine Verbindung zwischen dem Stoffauflauf und dem Former her, wobei die Dichtlippe typischerweise die um die jeweilige Formierwalze laufende Bespannung tangential berührt. Daraus folgt unmittelbar, dass der Verschleiß bezogen auf die Formierwalze in radialer Richtung, und bezogen auf die Dichtlippe in einer Richtung normal zur Oberfläche der Dichtlippe erfolgt. Somit ist die Verschleißrichtung der Dichtlippe typischerweise normal zur Oberfläche der Dichtlippe. Dichtlippen haben in der Regel die Form länglicher, dünner Lamellen. So können sie eine Abmessung von z. B. 5 m in einer Querrichtung, eine Abmessung von 500 mm in einer Längsrichtung und eine Abmessung von z.B. einem Millimeter in Richtung der Höhe aufweisen. Entsprechend obiger Definition erfolgt der Verschleiß im Wesentlichen in Richtung der Höhe der Dichtlippe und somit normal zur Längsrichtung und normal zur Querrichtung der Dichtlippe. Mit Anordnung des Indikators normal zu Verschleißrichtung kann der Verschleißfortschritt genau beurteilt werden, da der Indikator in der Dichtlippe in einer Ebene definierter Höhe angeordnet ist. Weiter ist der Indikator zumindest abschnittsweise in der Querrichtung angeordnet. Vorteilhafterweise erstreckt sich der Indikator über die gesamte Querrichtung der Dichtlippe. So kann verlässlich erfasst werden, wenn die Dichtlippe auch nur in einem Bereich stark verschleißt.

In einer weiteren vorteilhaften Ausgestaltung ist neben einem ersten Indikator zumindest ein zweiter Indikator in der Dichtlippe angeordnet und der zweite Indikator zu dem ersten Indikator in Verschleißrichtung versetzt. Mit der versetzten Anordnung einzelner Indikatoren in Verschleißrichtung, d.h. in Richtung der Höhe der Dichtlippe, kann der Verschleißfortschritt genauer ausgewertet werden, da die Indikatoren in der Dichtlippe in verschiedenen Ebenen definierter Höhe angeordnet sind. Der zweite Indikator ist ebenso zumindest teilweise im Bereich des Verschleißvolumens angeordnet und als elektrischer oder optischer Leiter ausgebildet. Vorteilhafterweise ist der zweite Indikator normal zu einer Verschleißrichtung der Dichtlippe angeordnet.

Eine ebenso günstige Ausgestaltung der Dichtlippe ist dadurch gekennzeichnet, dass neben einem ersten Indikator zumindest ein weiterer Indikator angeordnet ist, wobei der erste Indikator in einem ersten Abschnitt in Querrichtung der Dichtlippe und der weitere Indikator in einem zweiten Abschnitt in Querrichtung der Dichtlippe angeordnet ist. Durch die abschnittsweise Anordnung der Indikatoren in Querrichtung der Dichtlippe wird die abschnittsweise Auswertung des Verschleißes der Dichtlippe ermöglicht. Der weitere Indikator ist ebenso zumindest teilweise im Bereich des Verschleißvolumens angeordnet und als elektrischer oder optischer Leiter ausgebildet. Vorteilhafterweise ist der weitere Indikator normal zu einer Verschleißrichtung der Dichtlippe angeordnet.

Eine vorteilhafte Ausführung der Dichtlippe ist dadurch gekennzeichnet, dass der Indikator in der Dichtlippe in einer elektrisch oder optisch isolierenden Umgebung eingebettet ist. Erfindungsgemäß ist der Indikator - bzw. der zweite Indikator oder der weitere Indikator - als elektrischer oder optischer Leiter ausgebildet. Die Einbettung des Indikators - bzw. des zweiten Indikators oder des weiteren Indikators - in der Dichtlippe in einer elektrisch oder optisch isolierenden Umgebung umfasst somit folgende Ausgestaltungen.

In einer ersten Ausgestaltung ist der Indikator elektrisch leitend und von einer elektrischen Isolierung umgeben, bzw. in diese eingebettet, wobei der so isolierte Indikator in einer elektrisch leitenden Dichtlippe eingebettet ist. Beispielsweise kann ein als Kupferband ausgebildeter Indikator in einer aus Carbon oder Metall gefertigten und elektrisch leitenden Dichtlippe eingebettet sein, wobei der Indikator isoliert ist. Mit fortschreitendem Verschleiß wird die elektrische Isolierung des Indikators verletzt, wodurch eine elektrisch leitende Verbindung zwischen der Dichtlippe und dem Indikator entsteht. Die Änderung der elektrischen Eigenschaften des Indikators können unmittelbar erfasst werden. Generell können dazu verschiedenste elektrische Eigenschaften ausgewertet werden, wie z.B. Leitfähigkeit, Widerstand, Impedanz, wobei die elektrischen Eigenschaften des Indikators für sich oder in Relation zu einer umgebenden Masse, z.B. die umgebende Maschine oder weitere Indikatoren, erfasst werden können.

In einer zweiten Ausgestaltung ist der Indikator elektrisch leitend und in einer elektrisch isolierenden Dichtlippe eingebettet. Beispielsweise kann ein als Kupferband ausgebildeter Indikator in einer aus GFK (Glasfaserkunststoff) oder Kunststoff gefertigten und somit elektrisch isolierenden Dichtlippe eingebettet sein. Mit fortschreitendem Verschleiß wird der elektrische leitende Indikators aus der isolierenden Umgebung freigelegt, wodurch sich die elektrischen Eigenschaften des Indikators ändern, was unmittelbar erfasst werden kann. Die Auswertung der elektrischen Eigenschaften erfolgt dabei analog zu der oben ausgeführten ersten Ausgestaltung.

In einer dritten Ausgestaltung ist der Indikator optisch leitend bzw. ein optischer Leiter. Optische Leiter sind so aufgebaut, dass in einem Kernbereich die Lichtleitung erfolgt, wobei in einem umgebenden Bereich eine (Total-)Reflexion der Lichtwellen gegeben ist. Somit erfüllt der den leitenden Kernbereich umgebende Bereich des optischen Leiters bereits in sich die Anforderung einer optischen Isolierung. Die optischen Eigenschaften der Dichtlippe, in die der Indikator eingebettet ist, haben somit keinen weiteren Einfluss. Mit fortschreitendem Verschleiß wird der optisch leitende Indikator aus der Dichtlippe freigelegt, und mit Verletzung der optischen Isolierung ändern sich die optischen Eigenschaften des Indikators, was unmittelbar erfasst werden kann. Die Auswertung der optischen Eigenschaften umfasst beispielsweise Transmission, optische Dämpfung, Reflexion etc. Zusammenfassend kann somit festgehalten werden, dass die Dichtlippe dadurch gekennzeichnet ist, dass ein als elektrischer Leiter ausgebildeter Indikator in der Dichtlippe in einer elektrisch isolierenden Umgebung eingebettet ist oder dass ein als optischer Leiter ausgebildeter Indikator in der Dichtlippe eingebettet ist.

Ziel der Erfindung ist auch ein Dichtlippensystem mit einer verbesserten Betriebssicherheit, wobei das Dichtlippensystem eine erfindungsgemäße Dichtlippe und eine Auswerteeinheit zur Signalverarbeitung umfasst.

Dies gelingt erfindungsgemäß dadurch, dass der Indikator optisch oder elektrisch mit der Auswerteeinheit verbunden ist und der Indikator über die Auswerteeinheit überwachbar ist. So können über die Auswerteeinheit die elektrischen bzw. optischen Eigenschaften des Indikators überwacht werden. Hinsichtlich der elektrischen Eigenschaften wurde z.B. schon die Leitfähigkeit, der Widerstand oder die Impedanz angeführt, wobei diese in Bezug auf den Indikator für sich oder aber in Relation zu einer umgebenden Masse, z.B. die umgebende Maschine oder weitere Indikatoren, überwacht werden. Hinsichtlich der optischen Eigenschaften können beispielsweise die Transmission, die optische Dämpfung oder die Reflexion ausgewertet werden. Mit fortschreitendem Verschleiß wird der innerhalb der Dichtlippe angeordnete Indikator freigelegt. Mit Freilegung des Indikators verändern sich die überwachten Eigenschaften signifikant, da beispielsweise der elektrische Leiter aus seiner elektrisch isolierenden Umgebung freigelegt wird oder aber beispielsweise der optische Leiter freigelegt wird.

Die Auswerteeinheit kann getrennt von der Dichtlippe angeordnet sein, wobei die Auswerteeinheit beispielsweise kabelgestützt mit dem Indikator verbunden ist.

Die Auswerteeinheit kann aber auch direkt an der Dichtlippe angeordnet und mit dem Indikator verbunden sein, wobei die Eigenschaften des Indikators durch die Auswerteeinheit erfasst und zur weiteren Übertragung aufbereitet werden. Die weitere Übertragung durch die Auswerteeinheit (z.B. an ein Anlagenkontrollsystem) kann kabellos aktiv, kabellos passiv (via RFID, NFC oder ähnliches) oder kabelgestützt erfolgen.

Ziel der Erfindung ist auch ein Stoffauflauf mit einer Dichtlippe, der einen besonders sicheren Betrieb erlaubt. Ermöglicht wird dies durch einen Stoffauflauf mit einer erfindungsgemäßen Dichtlippe, wodurch ein unerwartetes Versagen der Dichtlippe ausgeschlossen werden kann.

Weiter ist ein Verfahren zum sicheren Betrieb einer Dichtlippe in einem Stoffauflauf Ziel der Erfindung. Dies gelingt erfindungsgemäß durch Überwachen des Dichtlippensystems und ist dadurch gekennzeichnet, dass mittels der Auswerteeinheit die optischen oder elektrischen Eigenschaften des Indikators gemessen werden. Dabei wird mit fortschreitendem Verschleiß der innerhalb der Dichtlippe angeordnete leitende Indikator freigelegt, wobei die überwachten Eigenschaften sich mit der Freilegung des Indikators signifikant ändern, wenn beispielsweise der elektrische Leiter aus seiner elektrisch isolierenden Umgebung freigelegt oder aber der optische Leiter verletzt wird.

Eine besonders günstige Ausgestaltung des Verfahrens ist dadurch gekennzeichnet, dass mittels der Auswerteeinheit die optischen oder elektrischen Eigenschaften von einem ersten Indikator und zumindest einem weiteren Indikator gemessen werden, wobei die Veränderung der optischen oder elektrischen Eigenschaften des ersten Indikators gegenüber dem weiteren Indikator als Maß für den Verschleiß der Dichtlippe verwendet wird. Die Veränderung der Eigenschaften des ersten Indikators gegenüber dem weiteren Indikator erlaubt eine verbesserte Zuordnung des Verschleißes. Wenn beispielsweise der erste Indikator gegenüber dem weiteren Indikator in Verschleißrichtung versetzt angeordnet ist, so kann der Verschleißfortschritt in Verschleißrichtung ausgewertet werden. Wenn beispielsweise der erste Indikator in einem ersten Abschnitt in Querrichtung der Dichtlippe und der weitere Indikator in einem weiteren Abschnitt in Querrichtung der Dichtlippe angeordnet ist, so kann der unterschiedliche Verschleiß in Querrichtung der Dichtlippe ausgewertet werden. Generell ist die relative Auswertung der elektrischen oder optischen Eigenschaften des ersten Indikators gegenüber dem weiteren Indikator eine Möglichkeit, die Veränderung der elektrischen oder optischen Eigenschaften auszuwerten.

Eine vorteilhafte Ausgestaltung des Verfahrens ist dadurch gekennzeichnet, dass mittels der Auswerteeinheit die optischen Eigenschaften des Indikators, umfassend Lichtleitung, Transmission, optische Dämpfung oder Reflexion, oder die elektrischen Eigenschaften des Indikators, umfassend die Leitfähigkeit, den Isolationswiderstand oder die Impedanz, gemessen werden, wobei ein Verschleiß der Dichtlippe mit einem Materialabtrag an dem Indikator eine Änderung der optischen bzw. elektrischen Eigenschaften gegenüber den optischen bzw. elektrischen Eigenschaften des unverletzten Indikators bewirkt und als Maß für den Verschleiß der Dichtlippe verwendet wird. Ein Verschleiß der Dichtlippe mit einem Materialabtrag an dem Indikator bedeutet, dass der Indikator durch den Verschleiß aus der Dichtlippe freigelegt wird und eine Verletzung des Indikators bzw. ein Materialabtrag am Indikator erfolgt. Dabei beeinflusst die Verletzung des Indikators dessen optische und elektrische Leitfähigkeit. So wird bei einem Lichtleiter die Totalreflexion des Lichts an dem den Kernbereich umgebenden Bereich verändert - und somit die Lichtleitung im Kernbereich des Lichtleiters. Ebenso verändern sich die elektrischen Leiteigenschaften eines elektrisch leitenden Indikators, so dieser durch Verschleiß freigelegt bzw. verletzt wird.

In einer vorteilhaften Ausgestaltung ist eine Änderung der optischen bzw. elektrischen Eigenschaften des Indikators messbar, sobald der Verschleiß an der Dichtlippe zu einem Freilegen des Indikators aus seiner elektrisch bzw. optisch isolierenden Umgebung führt. Der Indikator ist als elektrischer oder optischer Leiter ausgeführt und in einer isolierenden Umgebung eingebettet. Durch den Verschleiß wird der Indikator aus der isolierenden Umgebung freigelegt. Im Falle eines elektrisch leitenden Indikators verursacht die Verletzung der Isolierung eine messbare Änderung der elektrischen Eigenschaften des Indikators. Im Falle des optischen Leiters bzw. Lichtleiters kann der den Kernbereich des Lichtleiters umgebende Bereich als optisch isolierende Umgebung interpretiert werden, womit eine Verletzung der optisch isolierenden Umgebung eine messbare Änderung der optischen Eigenschaften des Indikators bewirkt. Zusammenfassend ist somit eine Änderung der optischen bzw. elektrischen Eigenschaften des Indikators messbar, sobald der Verschleiß an der Dichtlippe zu einer Verletzung des optischen Leiters bzw. einem Freilegen des elektrischen Indikators aus seiner elektrisch isolierenden Umgebung führt.

Eine ebenso günstige Ausgestaltung des Verfahrens ist dadurch gekennzeichnet, dass ein Verschleiß der Dichtlippe mit einer Unterbrechung bzw. Zerstörung des Indikators eine weitere unterscheidbare Änderung der optischen bzw. elektrischen Eigenschaften bewirkt. Überraschenderweise wurde festgestellt, dass durch Messung der optischen bzw. der elektrischen Eigenschaften des Indikators klar unterschieden werden kann, ob der Indikator in der Dichtlippe eingebettet ist ohne Verletzung des Indikators, ob eine Freilegung des Indikators mit Verletzung des Indikators vorliegt oder ob der Indikator durch den Verschleiß unterbrochen und somit zerstört wurde. So kann durchaus nach einem ersten Anzeigen einer Verletzung des Indikators eine weitere Nutzungsdauer der Dichtlippe gegeben sein, bis eine vollständige Unterbrechung des Indikators eintritt. Ebenso kann das Anzeigen der Unterbrechung des Indikators die erste Schadensmeldung des Indikators darstellen. Dies mag beispielsweise auf eine spontane Rissbildung in der Dichtlippe deuten, was durch das erfindungsgemäße Verfahren erfasst werden kann.

Eine weitere vorteilhafte Ausgestaltung des Verfahrens ist dadurch gekennzeichnet, dass mittels der Auswerteeinheit die Eigenschaften des Indikators gegen eine Referenz gemessen werden. Somit können die optischen bzw. elektrischen Eigenschaften bezogen auf den Indikator für sich, gegen eine umgebende Masse (z.B. die umgebende Maschine) oder in Relation zu weiteren Indikatoren gemessen werden.

Die Erfindung wird nun anhand der Zeichnungen beispielhaft beschrieben.
Fig. 1 zeigt einen Stoffauflauf mit Dichtlippen.
Fig. 2 zeigt eine erfindungsgemäße Dichtlippe.
Fig. 3 zeigt exemplarisch den Verlauf einer Eigenschaft des Indikators über dem Verschleiß der Dichtlippe.

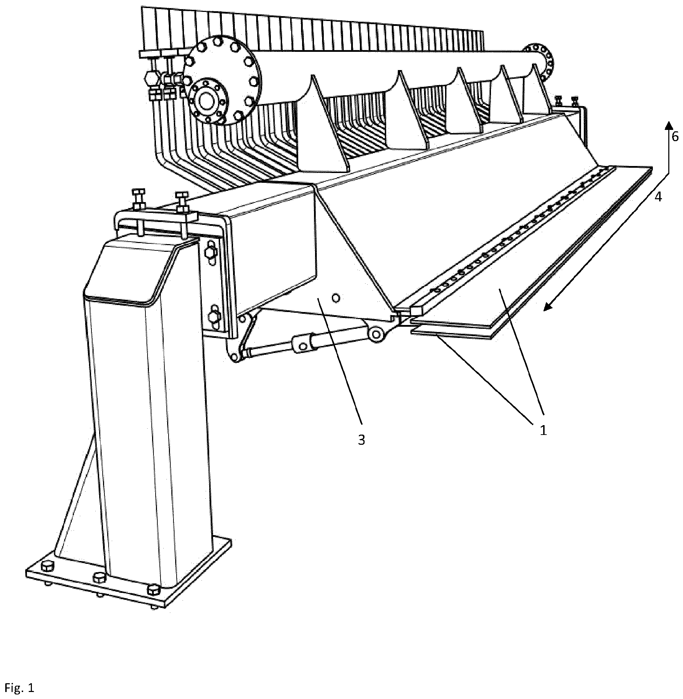

Fig. 1 zeigt einen Stoffauflauf 3 mit Dichtlippen 1, wobei die Dichtlippen 1 im Düsenbereich des Stoffauflaufs 3 angeordnet sind und eine Verbindung zwischen dem Stoffauflauf 3 und einem Former (nicht dargestellt), z.B. Doppelsiebformer, herstellen, wobei eine Faserstoffsuspension über den Stoffauflauf durch den Düsenbereich zwischen den Dichtlippen 1 dem Former zugeführt wird. Im Falle eines Doppelsiebformers wird die Stoffsuspension zwischen zwei Bespannungen (Entwässerungssiebe) eingebracht, wobei die obere bzw. die untere Bespannung um eine obere bzw. untere Formierwalze geführt ist. Dabei berührt die obere Dichtlippe 1 die um die oberer Formierwalze geführte Bespannung, wobei die obere Dichtlippe tangential zu der oberen Formierwalze angeordnet ist. Analog berührt die untere Dichtlippe 1 die um die untere Formierwalze geführte Bespannung, wobei die untere Dichtlippe tangential zu der unteren Formierwalze angeordnet ist. Infolge des Kontakts der Dichtlippen mit den umlaufenden Bespannungen kommt es zu einem zunehmenden Verschleiß an den Dichtlippen. In Figur 1 ist weiter die Querrichtung 4 - in Anlehnung an die "Maschinenquerrichtung" - dargestellt, wie auch die Richtung der Höhe 6 der Dichtlippe. Entsprechend dem tangentialen Kontakt der Dichtlippen mit den Bespannungen erfolgt ein Verschleiß vornehmlich in einer Richtung normal zu der Querrichtung 4 und der Längsrichtung 5. Der Verschleiß erfolgt somit vornehmlich in Richtung der Höhe 6.

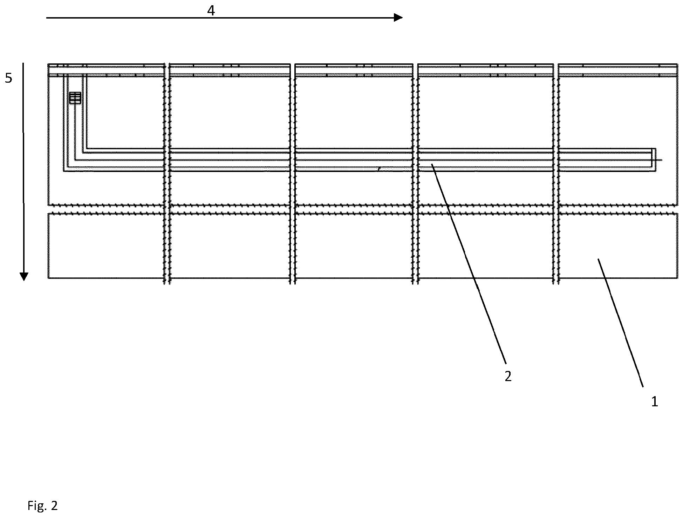

Fig. 2 zeigt eine erfindungsgemäße Dichtlippe 1 mit einem Indikator 2. Dichtlippen 1 haben typischerweise die Form länglicher, dünner Lamellen. So können sie eine Abmessung von z. B. 5 m in einer Querrichtung 4 (in Anlehnung an eine "Maschinenquerrichtung"), eine Abmessung von 500 mm in einer Längsrichtung 5 (in Anlehnung an eine "Maschinenlängsrichtung") und eine Abmessung von z.B. einem Millimeter in Richtung der Höhe 6 aufweisen. In Fig. 2 ist die Dichtlippe 1 mehrmals unterbrochen, um die sehr längliche Dichtlippe 1 vollständig darstellen zu können. Die Unterbrechungen sind als Linien mit kurzen Teilungen dargestellt, wobei in Fig. 2 die Dichtlippe in Längsrichtung 5 einmal unterbrochen und in Querrichtung 4 vier Mal unterbrochen dargestellt ist.

Vorteilhafterweise ist der Indikator 2 in einem Bereich in Längsrichtung 5 der Dichtlippe 1 angeordnet, in dem mit einem vermehrten Verschleiß zu rechnen ist, beispielsweise in einem Bereich in Längsrichtung 5 der Dichtlippe 1, in dem die Dichtlippe 1 mit der Bespannung des Formers in Berührung steht. In einer vorteilhaften Ausführung der Dichtlippe 1 ist der Indikator 2 parallel zur Querrichtung 4 und vom Befestigungsende der Dichtlippe 1 gesehen (in Fig. 2 im oberen Bereich der Dichtlippe angeordnet) in Längsrichtung 5 der Dichtlippe 1 im Bereich zwischen dem ersten Viertel und dem zweiten Viertel der Dichtlippe 1 angeordnet. Der Indikator 2 ist erfindungsgemäß als elektrischer oder optischer Leiter ausgebildet. In einer vorteilhaften Ausführungsform ist der Indikator 2 in der Dichtlippe 1 in einer elektrisch oder optisch isolierenden Umgebung eingebettet. Verschiedene Ausgestaltungen der Dichtlippe 1 sind denkbar. In einer ersten Ausgestaltung ist der Indikator elektrisch leitend und von einer elektrischen Isolierung umgeben, wobei der isolierte Indikator in einer elektrisch leitenden Dichtlippe eingebettet ist. Beispielsweise kann ein als Kupferband ausgebildeter Indikator in einer aus Carbon oder Metall gefertigten und elektrisch leitenden Dichtlippe eingebettet sein, wobei der Indikator isoliert ist.

In einer zweiten Ausgestaltung ist der Indikator elektrisch leitend und in einer elektrisch isolierenden Dichtlippe eingebettet. Beispielsweise kann ein als Kupferband ausgebildeter Indikator in einer aus GFK (Glasfaserkunststoff) oder Kunststoff gefertigten und somit elektrisch isolierenden Dichtlippe eingebettet sein.

In einer dritten Ausgestaltung ist der Indikator optisch leitend bzw. ein optischer Leiter. Die optischen Eigenschaften der Dichtlippe, in die der Indikator eingebettet ist, haben keinen weiteren Einfluss.

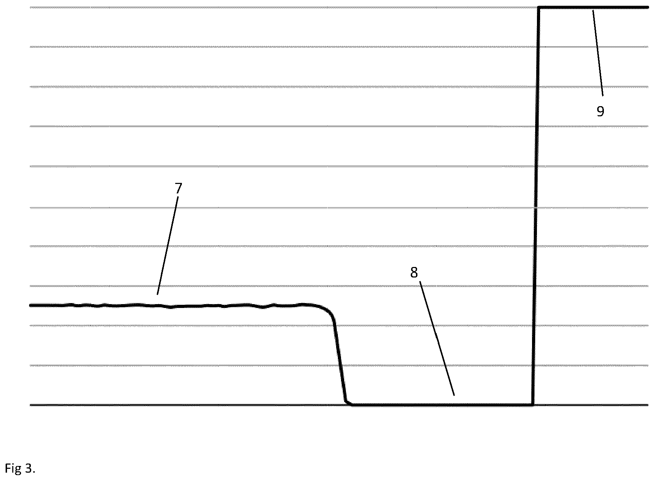

Fig. 3 zeigt exemplarisch den Verlauf einer Eigenschaft des Indikators über dem Verschleiß der Dichtlippe. Das Dichtlippensystem erlaubt die Überwachung des Verschleißes der Dichtlippe durch die Erfassung der optischen oder elektrischen Eigenschaften des Indikators 2 über die Auswerteeinheit. Es wurde festgestellt, dass durch Messung der optischen bzw. der elektrischen Eigenschaften des Indikators 2 verschiedene Verschleißzustände der Dichtlippe 1 unterschieden werden können. In Fig.3 ist auf der Abszisse von links nach rechts ein zunehmender Verschleißzustand der Dichtlippe 1 dargestellt, und auf der Ordinate eine optische oder elektrische Eigenschaft des Indikators. Insbesondere ist unterscheidbar, ob der Indikator 2 in der Dichtlippe eingebettet ist ohne Verletzung des Indikators (siehe Fig.3 Bezugsziffer 7), ob eine Freilegung des Indikators mit Verletzung des Indikators vorliegt (siehe Fig.3 Bezugsziffer 8) oder ob der Indikator durch den Verschleiß unterbrochen (siehe Fig.3 Bezugsziffer 9) und somit zerstört wurde. Am Beispiel eines elektrisch leitenden und in der Dichtlippe in einer elektrisch isolierenden Umgebung eingebetteten Indikators (2) weist der elektrische Leiter beispielsweise einen elektrischen Widerstand auf (siehe Fig.3 Bezugsziffer 7). Mit Freilegen des Indikators 2, wobei die Isolierung des Indikators 2 unterbrochen wurde und eine leitende Verbindung zur Umgebung gegeben ist, verringert sich der Wiederstand des Leiters signifikant (siehe Fig.3 Bezugsziffer 8). Mit weiter fortschreitendem Verschleiß und Unterbrechung des Indikators 2 und somit mit Unterbrechung der leitenden Verbindung stellt sich jedoch ein signifikant höherer Wiederstand ein (siehe Fig.3 Bezugsziffer 9). In Bezug auf einen als elektrischer Leiter ausgebildeten Indikator können verschiedenste Eigenschaften des Indikators erfasst und ausgewertet werden, wie z.B. Leitfähigkeit, Widerstand, Impedanz, wobei die elektrischen Eigenschaften des Indikators für sich oder in Relation zu einer umgebenden Masse, z.B. die umgebende Maschine oder weitere Indikatoren, erfasst werden. Bei Verwendung eines als optischer Leiter ausgebildeten Indikators können analog verschiedenste optische Eigenschaften des Indikators erfasst und ausgewertet werden, wie z.B. die Transmission, optische Dämpfung, Reflexion etc.

Die vorliegende Erfindung bietet zahlreiche Vorteile, insbesondere ist ein sicherer Betrieb von Stoffaufläufen mit Dichtlippen möglich, da ein unvorhergesehenes Versagen der Dichtlippe ausgeschlossen werden kann. So haben die erfindungsgemäßen Eigenschaften den Effekt, dass eine durchgehende Überwachung des Verschleißes der Dichtlippe möglich wird, ohne einen Ausbau der Dichtlippe aus der Maschine zu erfordern. Neben der Möglichkeit das Erreichen einer bestimmten Verschleißgrenze zu erfassen - nämlich bei Freilegung bzw. Verletzung des Indikators - erlaubt die Erfindung auch ein spontanes Versagen der Dichtlippe zu erkennen, z.B. bei Rissbildung. In letzterem Fall wurde der Indikator beispielsweise durch einen Riss unterbrochen und somit zerstört, wobei der Schaden unmittelbar erfasst wird.

### Bezugszeichen

- (1): Dichtlippe
- (2): Indikator
- (3): Stoffauflauf
- (4): Querrichtung
- (5): Längsrichtung
- (6): Richtung der Höhe
- (7): Signal bei vollständiger Einbettung des Indikators
- (8): Signal bei Freilegung/Verletzung des Indikators
- (9): Signal bei Unterbrechung des Indikators

## Patentansprüche

1. Dichtlippe (1) für einen Stoffauflauf (3), wobei die Dichtlippe (1) ein Verschleißvolumen aufweist, **dadurch gekennzeichnet, dass** innerhalb der Dichtlippe (1) zumindest ein Indikator (2) zumindest teilweise im Bereich des Verschleißvolumens angeordnet ist und der Indikator (2) als elektrischer oder optischer Leiter ausgebildet ist.

2. Dichtlippe (1) nach Anspruch 1, **dadurch gekennzeichnet, dass** der Indikator (2) normal zu einer Verschleißrichtung der Dichtlippe (1) und zumindest abschnittsweise in einer Querrichtung (4) der Dichtlippe (1) angeordnet ist.

3. Dichtlippe (1) nach Anspruch 2, **dadurch gekennzeichnet, dass** neben dem Indikator (2) zumindest ein zweiter Indikator (2) angeordnet ist und der zweite Indikator (2) zu dem Indikator (2) in Verschleißrichtung versetzt ist.

4. Dichtlippe (1) nach einem der Ansprüche 1 bis 3, **dadurch gekennzeichnet, dass** neben dem Indikator (2) zumindest ein weiterer Indikator (2) angeordnet ist, wobei der Indikator (2) in einem ersten Abschnitt in Querrichtung (4) der Dichtlippe (1) und der weitere Indikator (2) in einem zweiten Abschnitt in Querrichtung (4) der Dichtlippe (1) angeordnet ist.

5. Dichtlippe (1) nach einem der Ansprüche 1 bis 4, **dadurch gekennzeichnet, dass** der Indikator (2) in der Dichtlippe (1) in einer elektrisch oder optisch isolierenden Umgebung eingebettet ist.

6. Dichtlippensystem umfassend eine Dichtlippe (1) nach einem der Ansprüche 1 bis 5 und eine Auswerteeinheit zur Signalverarbeitung, **dadurch gekennzeichnet, dass** der Indikator (2) optisch oder elektrisch mit der Auswerteeinheit verbunden ist und der Indikator (2) über die Auswerteeinheit überwachbar ist.

7. Stoffauflauf (3) mit einer Dichtlippe (1) nach einem der Ansprüche 1 bis 5.

8. Verfahren zum Überwachen des Dichtlippensystems nach Anspruch 6, **dadurch gekennzeichnet, dass** mittels der Auswerteeinheit die optischen oder elektrischen Eigenschaften des Indikators (2) gemessen werden.

9. Verfahren nach Anspruch 8, **dadurch gekennzeichnet, dass** mittels der Auswerteeinheit die optischen oder elektrischen Eigenschaften von einem ersten Indikator (2) und zumindest einem weiteren Indikator (2) gemessen werden, wobei die Veränderung der optischen oder elektrischen Eigenschaften des ersten Indikators (2) gegenüber dem weiteren Indikator (2) als Maß für den Verschleiß der Dichtlippe (1) verwendet wird.

10. Verfahren nach Anspruch 8, **dadurch gekennzeichnet, dass** mittels der Auswerteeinheit die optischen Eigenschaften des Indikators (2), umfassend Lichtleitung, Transmission, optische Dämpfung oder Reflexion, oder die elektrischen Eigenschaften des Indikators (2), umfassend die Leitfähigkeit, den Isolationswiderstand oder die Impedanz, gemessen werden, wobei ein Verschleiß der Dichtlippe (1) mit einem Materialabtrag an dem Indikator (2) eine Änderung der optischen bzw. elektrischen Eigenschaften gegenüber den optischen bzw. elektrischen Eigenschaften des unverletzten Indikators (2) bewirkt und als Maß für den Verschleiß der Dichtlippe (1) verwendet wird.

11. Verfahren nach Anspruch 8, **dadurch gekennzeichnet, dass** eine Änderung der optischen bzw. elektrischen Eigenschaften des Indikators (2) messbar ist, sobald der Verschleiß an der Dichtlippe (1) zu einem Freilegen des Indikators (2) aus seiner elektrisch bzw. optisch isolierenden Umgebung führt.

12. Verfahren nach Anspruch 11, **dadurch gekennzeichnet, dass** ein Verschleiß der Dichtlippe (1) mit einer Unterbrechung bzw. Zerstörung des Indikators (2) eine weitere unterscheidbare Änderung der optischen bzw. elektrischen Eigenschaften bewirkt.

13. Verfahren nach Anspruch 10, **dadurch gekennzeichnet, dass** mittels der Auswerteeinheit die Eigenschaften des Indikators (2) gegen eine Referenz gemessen werden.

## Claims

1. Sealing lip (1) for a headbox (3), the sealing lip (1) having a wear volume, **characterised in that** at least one indicator (2) is arranged inside the sealing lip (1) at least partially in the region of the wear volume and the indicator (2) is designed as an electrical or optical conductor.

2. Sealing lip (1) according to claim 1, **characterised in that** the indicator (2) is arranged normal to a direction of wear of the sealing lip (1) and at least in sections in a transverse direction (4) of the sealing lip (1).

3. Sealing lip (1) according to claim 2, **characterised in that** at least one second indicator (2) is arranged next to the indicator (2) and the second indicator (2) is offset from the indicator (2) in the direction of wear.

4. Sealing lip (1) according to one of claims 1 to 3, **characterized in that** at least one further indicator (2) is arranged next to the indicator (2), the indicator (2) being arranged in a first section in the transverse direction (4) of the sealing lip (1) and the further indicator (2) being arranged in a second section in the transverse direction (4) of the sealing lip (1).

5. Sealing lip (1) according to any one of claims 1 to 4, **characterised in that** the indicator (2) is embedded in the sealing lip (1) in an electrically or optically insulating environment.

6. Sealing lip system comprising a sealing lip (1) according to one of claims 1 to 5 and an evaluation unit for signal processing, **characterised in that** the indicator (2) is optically or electrically connected to the evaluation unit and the indicator (2) can be monitored via the evaluation unit.

7. Headbox (3) with a sealing lip (1) according to one of claims 1 to 5.

8. Method for monitoring the sealing lip system according to claim 6, **characterised in that** the optical or electrical properties of the indicator (2) are measured by means of the evaluation unit.

9. Method according to claim 8, **characterized in that** the optical or electrical properties of a first indicator (2) and at least one further indicator (2) are measured by means of the evaluation unit, the change in the optical or electrical properties of the first indicator (2) with respect to the further indicator (2) being used as a measure of the wear of the sealing lip (1).

10. Method according to claim 8, **characterised in that** the optical properties of the indicator (2), comprising optical fibre, transmission, optical attenuation or reflection, or the electrical properties of the indicator (2), comprising the conductivity, the insulation resistance or the impedance, are measured by means of the evaluation unit, wherein wear of the sealing lip (1) with material removal on the indicator (2) causes a change in the optical or electrical properties compared with the optical or electrical properties of the undamaged indicator (2) and is used as a measure of the wear of the sealing lip (1).

11. Method according to claim 8, **characterised in that** a change in the optical or electrical properties of the indicator (2) can be measured as soon as the wear on the sealing lip (1) leads to the indicator (2) being exposed from its electrically or optically insulating environment.

12. Method according to claim 11, **characterised in that** wear of the sealing lip (1) with an interruption or destruction of the indicator (2) causes a further distinguishable change in the optical or electrical properties.

13. Method according to claim 10, **characterised in that** the properties of the indicator (2) are measured against a reference by means of the evaluation unit.

## Revendications

1. Lèvre d'étanchéité (1) destinée à une caisse de tête (3), la lèvre d'étanchéité (1) disposant d'un volume d'usure, **caractérisée en ce qu'**au moins un indicateur (2) est disposé à l'intérieur de la lèvre d'étanchéité (1) au moins à certains endroits dans la région du volume d'usure et l'indicateur (2) est conçu sous la forme d'un conducteur électrique ou optique.

2. Lèvre d'étanchéité (1) selon la revendication 1, **caractérisée en ce que** l'indicateur (2) est disposé perpendiculaire à un sens d'usure de la lèvre d'étanchéité (1) et au moins dans des sections dans une direction transversale (4) de la lèvre d'étanchéité (1).

3. Lèvre d'étanchéité (1) selon la revendication 2, **caractérisée en ce qu'**au moins un second indicateur (2) est disposé à proximité de l'indicateur (2) et le second indicateur (2) est décalé par rapport à l'indicateur (2) dans le sens d'usure.

4. Lèvre d'étanchéité (1) selon l'une quelconque des revendications 1 à 3, **caractérisée en ce qu'**au moins un autre indicateur (2) est disposé à proximité de l'indicateur (2), l'indicateur (2) étant disposé dans une première section dans la direction transversale (4) de la lèvre d'étanchéité (1) et l'autre indicateur (2) étant disposé dans une seconde section dans la direction transversale (4) de la lèvre d'étanchéité (1).

5. Lèvre d'étanchéité (1) selon l'une quelconque des revendications 1 à 4, **caractérisée en ce que** l'indicateur (2) est intégré dans la lèvre d'étanchéité (1) dans un environnement isolé électriquement ou optiquement.

6. Système de lèvre d'étanchéité comprenant une lèvre d'étanchéité (1) selon l'une quelconque des revendications 1 à 5 et une unité d'évaluation pour le traitement de signal, **caractérisé en ce que** l'indicateur (2) est connecté optiquement ou électriquement à l'unité d'évaluation et l'indicateur (2) peut être surveillé par le biais de l'unité d'évaluation.

7. Caisse de tête (3) pourvue d'une lèvre d'étanchéité (1) selon l'une quelconque des revendications 1 à 5.

8. Procédé de surveillance du système de lèvre d'étanchéité selon la revendication 6, **caractérisé en ce que** les propriétés optiques et électriques de l'indicateur (2) sont mesurées à l'aide de l'unité d'évaluation.

9. Procédé selon la revendication 8, **caractérisé en ce que** les propriétés optiques et électriques d'un premier indicateur (2) et d'au moins un autre indicateur (2) sont mesurées au moyen de l'unité d'évaluation, les modifications des propriétés optiques et électriques du premier indicateur (2) par rapport à l'autre indicateur (2) étant utilisées comme mesure de l'usure de la lèvre d'étanchéité (1).

10. Procédé selon la revendication 8, **caractérisé en ce que** les propriétés optiques de l'indicateur (2), notamment la conduction de lumière, la transmission, la réflexion ou l'atténuation optique ou les propriétés électriques de l'indicateur (2), notamment la conductivité, la résistance d'isolement ou l'impédance, sont mesurées au moyen de l'unité d'évaluation, dans lequel l'usure de la lèvre d'étanchéité (1) avec un enlèvement de matière sur l'indicateur (2) provoque une modification des propriétés optiques ou électriques en comparaison avec les propriétés optiques et électriques de l'indicateur (2) qui n'a pas été endommagé et sert à mesurer l'usure de la lèvre d'étanchéité (1).

11. Procédé selon la revendication 8, **caractérisé en ce qu'**une modification des propriétés optiques ou électriques de l'indicateur (2) peut être mesurée dès que l'usure de la lèvre d'étanchéité (1) provoque la mise à nu de l'indicateur (2) dans son environnement isolé électriquement ou optiquement.

12. Procédé selon la revendication 11, **caractérisé en ce que** l'usure de la lèvre d'étanchéité (1) une fois que l'indicateur (2) est rompu ou endommagé, provoque une autre modification distinguable des propriétés optiques et électriques.

13. Procédé selon la revendication 10, **caractérisé en ce que** les propriétés de l'indicateur (2) sont mesurées par rapport à une référence au moyen de l'unité d'évaluation.
